**Europäisches Patentamt**

**European Patent Office**

**Office européen des brevets**

(19)

(11) Publication number: **0 012 013**

**A1**

(12) **EUROPEAN PATENT APPLICATION**

(21) Application number: **79302718.6**

(22) Date of filing: **29.11.79**

(51) Int. Cl.³: **A 01 G 9/10**

(30) Priority: .29.11.78 GB 4659878

(43) Date of publication of application:
**11.06.80 Bulletin 80/12**

(84) Designated Contracting States:
**BE DE FR GB NL**

(71) Applicant: **Maricliff Garden Products Limited**
**51, Central Chambers**
**Stratford Upon Avon(GB)**

(72) Inventor: **Higgins, David**
**209, Luddington**
**Stratford upon Avon(GB)**

(74) Representative: **Cooper, Derek Robert et al,**
**MARKS & Clerk Alpha Tower ATV Centre**
**Birmingham B1 1TT(GB)**

(54) **A planting tray.**

(57) A planting tray comprises a flat imperforate base 10 on an upper surface 11 of which a cell structure 12 rests, the cell structure being for filling with a planting medium, such as compost. The cell structure 12 is composed of a plurality of generally planar divider members 13 detachably connected together by means of slots 14 therein, each slot being chamfered where it opens onto an edge of the respective divider member 13 to permit the easy insertion of another divider member therein. Seedlings or plants which have been grown in the individual cells of the cell structure 12 are prepared for transplanting by the simple expedient of detaching the divider members 13 from one another by moving each divider member in its respective general plane, thereby leaving the individual root balls intact on the base 10. Damage to the root balls is thus obviated, and the planting tray can therefore be used to grow plants which cannot normally be transplanted due to the danger of root damage.

EP 0 012 013 A1

0012013

This invention relates to a planting tray principally for use as a seed tray.

According to the present invention, there is provided a planting tray comprising a flat, substantially imperforate base having at least one open edge, and a cell structure composed of a plurality of mutually intersecting, generally planar divider members which are detachably connectible together in such a manner that, when the cell structure is rested on the base and is filled with planting medium in use, the divider members can be detached from one another by movement in their respective general planes without substantial disturbance of the planting medium.

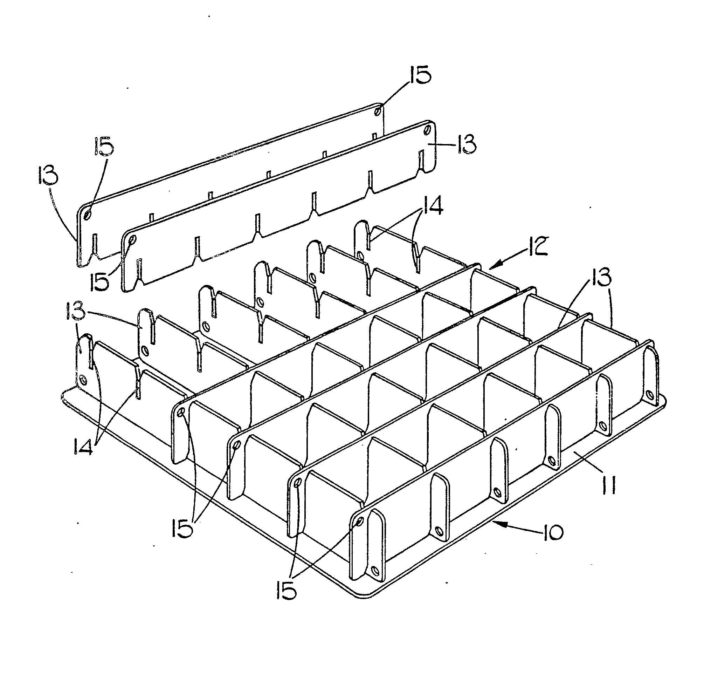

An embodiment of the present invention will now be described, by way of example, with reference to the accompanying drawing, which is an exploded perspective view of a seed tray according to the present invention.

Referring to the drawing, the illustrated seed tray comprises a rigid imperforate base 10 whose upper surface 11 is flat and substantially free from surface blemishes, the base being square or rectangular and having all four of its edges open. Restable on the upper surface 11 is a cell structure 12 which is composed of a plurality (in this case, twelve) of generally planar divider members 13. The cell structure 12 defines a 5 x 5 grid of individual planting cells in each of which one or more seeds, seedlings, etc can be planted. The divider members 13 are slotted so as to enable them to be detachably connected together. In fact, each divider member 13 has six equi-spaced slots 14 therein which open onto a common edge of the divider member. The cell structure is assembled in use by placing six of the divider members in laterally spaced, parallel relation with their slots opening upwardly, by orienting the remaining six divider members at right angles to the "slot up" divider members with the slots therein opening downwardly, and by
engaging the slots in each of the "slot down" divider
members with respective slots in all six of the "slot up"
divider members.   To facilitate such engagement, the
slots are chamfered or tapered where they open out onto
the edge of the respective divider member.   This tapering
also facilitates drainage and watering (by submersion) so
that no drainage holes need be provided in the base 10.
Such holes are undesirable, since they may allow plant roots
to grow therethrough and thus impede the subsequent removal
of the root balls from the base.   Each divider member 13
has two holes 15 at either end thereof which enables it to
be hung up for storage.

The base 10 and the divider members 13 are preferably
made of plastics material, for example a medium impact
styrene.

In use, the assembled cell structure 12 is placed on
the upper surface 11 of the base 10, and the cells
therein are filled with planting medium (e.g. compost)
up to the level of the upper edges of the divider members
13.   Seeds, seedlings or the like are then sown or
planted in the cell structure, preferably at the rate of
two per cell.   When the resultant plants are ready
for planting out, the "slot down" divider members are
removed from the cell structure by moving them upwardly
(i.e. away from the base 10).   The "slot up" divider
members 13 are then removed from the planting medium by
sliding them along the base 10 in their direction of
extent, thereby leaving twenty-five individual root balls
and their associated plants on the upper surface 11 of
the base.   These root balls can then be slid off the base
10 and into a planting hole at the planting site as required.
The seed tray is then ready for re-use.

The seed tray described above is advantageous in that it enables the plants grown in it to be planted out without disturbing their roots, and is therefore useful for growing plants which cannot normally be transplanted due to the danger of root damage.  The seed tray is simple in construction, versatile in its application, and is easy to clean since its component parts have flat surfaces.  Moreover, its re-usability avoids the wastage which has previously been associated with disposable seed trays.  Furthermore, although in the above-described embodiment the cells of the cell structure are of equal size, it is possible to provide larger cells where necessary by removing one or more of the divider members 13.  In addition, because the component parts are detachable from each other, the seed tray can be sold in kit form for assembly by a purchaser.

CLAIMS:

1. A planting tray comprising a flat base and a cell structure on the base for filling with planting medium, characterised in that the base (10) is substantially imperforate and has at least one open edge, and the cell structure (12) is composed of a plurality of mutually intersecting, generally planar divider members (13) which are detachably connected together so that they can be detached from one another by movement in their respective general planes without substantial disturbance of the planting medium.

2. A planting tray as claimed in claim 1, wherein the divider members (13) are slotted to permit their detachable connection together.

3. A planting tray as claimed in claim 2, wherein the slots (14) in each divider member (13) open onto a common edge of the latter.

4. A planting tray as claimed in claim 2 or 3, wherein each slot (14) is chamfered where it opens onto an edge of the respective divider member (13).

5. A planting tray as claimed in any preceding claim wherein the base (10) and the divider members (13) are made of a durable material, such as a plastics material.

0012013

European Patent Office

**EUROPEAN SEARCH REPORT**

| | DOCUMENTS CONSIDERED TO BE RELEVANT | | | CLASSIFICATION OF THE APPLICATION (Int. Cl. 3) |
|---|---|---|---|---|
| Category | Citation of document with indication, where appropriate, of relevant passages | | Relevant to claim | |
| X | FR - A - 2 382 180 (VAN MEERTEN)  * Page 3, line 27 - page 4, line 34; figures 1-3 * | | 1-3,5 | A 01 G 9/10 |
| | GB - A - 1 416 874 (CLINKARD)  * Whole document * | | 1-3,5 | |
| | FR - A - 962 699 (MAUGRAS)  * Whole document * | | 1-3,5 | |
| | FR - A - 1 412 413 (BONISTALLI)  * Page 2, left-hand column, paragraph 4 - page 2, right-hand column, paragraph 1; figures 5-8 * | | 1-3,4 | |

TECHNICAL FIELDS SEARCHED (Int.Cl. 3)

A 01 G

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-02-1980 | HERYGERS |

EPO Form 1503.1  06.78